# EUROPEAN PATENT APPLICATION

(11) **EP 3 657 219 A1**
(43) Date of publication of application: **27.05.2020**
(21) Application number: 18207183.7
(22) Date of filing: 20.11.2018
(51) Int. Cl.: G01T 1/20, G01T 1/24

(54) **PHOTODIODE ARRAY ON FLEXIBLE SUBSTRATE FOR TOMOGRAPHY**

(71) Applicant: Koninklijke Philips N.V., 5656 AG Eindhoven (NL)
(72) Inventor: TOUSIGNANT, Olivier, 5656 AE Eindhoven (NL); SIMON, Matthias, 5656 AE Eindhoven (NL); ALVING, Peter Lex, 5656 AE Eindhoven (NL); JACOBS, Johannes Wilhelmus Maria, 5656 AE Eindhoven (NL); RUETTEN, Walter, 5656 AE Eindhoven (NL); GOSHEN, Rafael, 5656 AE Eindhoven (NL)
(74) Representative: de Haan, Poul Erik

(57) **Abstract**

A sensor array module (100) for sensing radiation is provided, comprising a flexible substrate (102) including a surface (112), a plurality of sensing elements (103) directly provided on a sensing area (104) of the surface of the flexible substrate, a plurality of conductive paths (113) comprised on the substrate, each conductive path (113) providing a direct electric connection between each sensing element (103) and one zone (126) of the substrate adapted for connecting one input of a readout unit (106). Further, a detector tile and a detector comprising such sensor array module is provided, as well as a method of manufacture.

## Description

### FIELD OF THE INVENTION

The present invention relates to the field of radiation detectors. More specifically it relates to sensors for medical applications, such as computed tomography applications.

### BACKGROUND OF THE INVENTION

Speed of data acquisition is an important factor in many imaging systems, especially in the medical field. For example, computed tomography (CT) imaging systems need high speed for obtaining scans of a patient. These systems usually include a radiation source, the probe radiation typically being X-rays. A detector usually includes several sensor tiles with pixel arrays, which can create an image from the X-rays after having been sent through a region of interest, such as a body, or part thereof, of a patient. These sensor tiles are arranged on a gantry which rotates while taking images. The spatial resolution of the image is an important factor linked to the array pixel density and to the number of images taken during the displacement of the gantry around the region of interest. In order to improve comfort of the patient, to reduce the amount of displacement of the organs (due to swelling or involuntary movements, for example) and thus to obtain a high quality image, and also to potentially reduce the overall exposure time to X-rays, a high speed of image acquisition is desired.

Due to the high rotation speed of the Detector Management System (DMS) in CT imaging, and the high rate of several thousands of X-ray acquisitions per second, current CT systems require very fast sensing elements. While crystalline silicon (c-Si) photodiodes are widely used in most CT systems due to their high performance, high speed and low capacitance, this well-known technology is expensive and brings complexity to the CT detector module assembly.

It is known, for instance from A. Nascetti et al., "Detection system based on a novel large area hybrid detector", Microelectronics Journal 41 (2010), 752-757, to implement a large area hybrid detector as an array of hydrogenated amorphous silicon photodiodes directly connected to a CMOS readout chip, which is vertically integrated over the sensor array using flip-chip bonding. This implementation includes a stack of interconnection layers, deposited on top of the photodiode array, to route each individual pixel output to a separate pre-amplifier channel, thus avoiding the need for a geometrical matching between the sensor array and the chip contact pads.

### SUMMARY OF THE INVENTION

t is an object of embodiments of the present invention to provide a good sensor array with fast response, suitable for CT applications, as well as devices related thereto, including but not limited to a sensor array module, a detector tile, in particular a CT detector tile, and a detector including a plurality of detector tiles.

In a first aspect, the present invention provides a sensor array module for sensing radiation, the sensor array module comprising a flexible substrate including a surface, a plurality of sensing elements directly provided on a sensing area of the surface of the flexible substrate, and a plurality of conductive paths comprised on the substrate, each conductive path providing a direct electric connection between each sensing element and one zone of the substrate adapted for connecting one input of a readout unit.

It is an advantage of embodiments of the present invention that the sensor array module does not need to store charge, making it suitable for high speed applications such as computed tomography. The use of a flexible substrate allows freedom of design, placement of any readout unit and related circuitry outside the sensing area for receiving radiation, and detector assembly simplification. It is a further advantage that the standard array bonding process, sometimes including an interposer layer, can be avoided. It is a further advantage of embodiments of the present invention that the flexibility allows greater freedom of design and simplified assembly. It further allows more freedom to shape a detector tile.

In some embodiments, the plurality of conductive paths of the sensor array extend outside the sensing area, along the substrate in at least a direction that can be defined on the plane of the surface of the substrate.

It is an advantage of embodiments of the present invention that shielding requirements for electronics of a readout unit are more relaxed.

In some embodiments of the present invention, the sensor array may be provided on a curved (e.g. convex) surface. The flexibility of the substrate easily allows such arrangement, and it may advantageously provide lower aberration in a CT detector.

In some embodiments of the present invention, the sensor array includes at least one scintillator array for providing wavelength conversion between radiation impinging on the sensor array module and radiation impinging on the sensing elements thereof.

It is an advantage of embodiments of the present invention that inexpensive and robust sensing elements for detecting visible light (e.g. photodiodes) can be used.

In some embodiments of the present invention, the substrate is a transparent or semi-transparent substrate and at least the contacts of sensing elements facing the substrate are transparent.

It is an advantage of embodiments of the present invention that back-illumination may be provided.

In some embodiments of the present invention, the sensor array includes at least two scintillator arrays optically coupled to the plurality of sensing elements at two opposite sides of the transparent or semi-transparent substrate.

It is an advantage of embodiments of the present invention that the sensor array can be illuminated from two sides with scintillator light, so the detective quantum efficiency (DQE) can be improved for spectral and non-spectral X-ray imaging. It may also lead to thinner scintillator layers, improving modulation transfer function, while the total scintillator thickness may increase, leading to further improvement of DQE.

In some embodiments of the present invention, the substrate comprises or is made of polyimide and/or polyethylene naphthalate.

It is an advantage of embodiments of the present invention that sufficient flexibility on a substrate can be provided in an inexpensive way.

In some embodiments of the present invention, the sensing elements comprise amorphous silicon photodiodes.

It is an advantage of embodiments of the present invention that the PDA can be inexpensive. It is a further advantage that a-Si PDs can be made thin, thus providing a compact PDA with low profile. It is a further advantage of thin PDs (for instance of thin a-Si PDs) that they may present lower probabilities of direct detection events of X-ray quanta. Flexible substrates including polymer such as PI or PEN can be used to deposit amorphous silicon for forming the PDs at lower temperature than crystalline silicon.

In some embodiments of the present invention, the sensor array module further comprises at least one anti-scatter grid.

It is an advantage of embodiments of the present invention that collimation of X-rays can be easily provided.

In some embodiments of the present invention, the sensor array module further comprises at least one readout unit for reading out signals generated by the sensing elements, the readout unit provided on a readout area of the substrate not overlapping the sensing area.

It is an advantage of embodiments of the present invention that the detector module can be used in a detector tile, e.g. a CT detector tile, with sufficient distance between the sensor array and the readout unit to reduce or avoid influences and cross-talk.

In a further aspect, the present invention provides a detector tile including at least one sensor array module in accordance with embodiments of the first aspect, and a holder for holding the sensor array module.

It is an advantage of embodiments of the present invention that a radiation detector (e.g. a CT detector) can be provided by abutting a plurality of detector tiles.

In some embodiments of the present invention, the detector tile comprises more than one sensor array module stacked on top of each other.

It is an advantage of embodiments of the present invention that a dual layer detector with a readout unit away from the sensing area can be easily provided. It is a further advantage that the dual layer detector may make use of thin sensing element, reducing or avoiding direct detection events of X-ray quanta.

In a further aspect, the present invention provides a detector comprising a plurality of detector tiles in accordance with embodiments of the previous aspect, wherein said detector tiles are abutted against one another.

In some embodiments of the present invention, the detector is adapted for providing a gap distance equal or lower than 300 µm, where the gap distance is the distance between areas of the substrate including sensing elements of at least two tiles.

It is an advantage of embodiments of the present invention that the sensing area of a radiation detector can be quasi continuous, or at least presenting small, e.g. negligible, blind spots.

In a further aspect, the present invention provides a method of manufacturing a sensor array module, the method comprising the step of providing a flexible substrate, subsequently further comprising the non-sequential steps of
- providing an array of sensing elements directly on an area of the surface of the flexible substrate, and
- providing conductive paths on the substrate, between an area on the surface of the substrate for receiving sensing elements and a further area of the substrate, for providing a direct electric connection between each sensing element and one input of a readout unit.

It is an advantage of embodiments of the present invention that a sensing system can be easily provided, with no need of an interposer, and no need of bonding sensor array obtained from one substrate to a different substrate.

In some embodiments of the present invention, the step of providing an array of sensing elements comprises depositing amorphous silicon photodiodes on the substrate.

It is an advantage of embodiments of the present invention that a thin photodiode, possible to be formed on a flexible substrate such as a polymeric substrate, can be obtained. It is a further advantage that a PDA can be obtained in an inexpensive way.

In some embodiments of the present invention, the method further comprises providing a readout unit on an area of the substrate not overlapping with the sensing area comprising the sensing elements, and connecting one input of the readout unit to each conductive path on the substrate.

It is an advantage of embodiments of the present invention that a detection module can be provided with relaxed requirements of processor shielding and low risk of cross talk.

Particular aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### BRIEF DESCRIPTION OF THE DRAWINGS

FIG 1 illustrates a top view of a sensor array module in accordance with embodiments of the present invention.
FIG 2 illustrates a top view of a particular detector a module, comprising a sensor array module with two sub-arrays, and two readout units.
FIG 3 illustrates a cross section of a detector tile according to embodiments of the present invention, wherein a detector module (or sensor array module comprising a readout unit) according to embodiments of the present invention is folded around a holder.
FIG 4 illustrates a cross section of another embodiment of a detector tile, comprising two sensor array modules according to embodiments of the present invention folded around a holder, the sensor arrays of the sensor array modules being positioned on top of one another.
FIG 5 schematically illustrates a detector according to embodiments of the present invention, assembled from detector tiles according to embodiments of the present invention.
FIG 6 is a diagram of a method for providing in different stages a sensor array module, a detector tile and a detector, in accordance with embodiments of the present invention.
FIG 7 illustrates a cross section of another embodiment of a detector tile, comprising a sensor array module according to embodiments of the present invention sandwiched between, and optically coupled with, two scintillators.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### DETAILED DESCRIPTION OF ILLUSTRATIVE EMBODIMENTS

The present invention will be described with respect to particular embodiments and with reference to certain drawings but the invention is not limited thereto but only by the claims. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "sensing element", reference is made to an element which can be exposed to radiation, and which provides a measurable response (e.g. an electric signal) to received radiation. A sensor array comprises a plurality of sensing elements logically organized in rows and columns. The terms "column" and "row" are used to describe sets of array elements which are linked together. The linking can be in the form of a Cartesian array of rows and columns; however, the present invention is not limited thereto. As will be understood by those skilled in the art, columns and rows can be easily interchanged and it is intended in this disclosure that these terms be interchangeable. Also, non-Cartesian arrays may be constructed and are included within the scope of the invention. Accordingly, the terms "row" and "column" should be interpreted widely. To facilitate in this wide interpretation, by "logically organized rows and columns" it is meant that sets of elements are linked together in a topologically linear intersecting manner; however, that the physical or topographical arrangement need not be so. For example, the rows may be circles and the columns radii of these circles and the circles and radii are described in this invention as "logically organized" rows and columns.

In the field of imaging devices, high speed of image acquisition and processing are usually preferred or required. This is especially important in the field of medical imaging, where long exposure times usually result in worse quality of obtained images. Instruments for use in such high speed image acquisition and processing are usually very expensive. The present invention, to the contrary, provides an inexpensive sensor array and sensor array module including the sensor array, which has a great design freedom and high speed. The sensing elements of a sensor array of a sensor array module are directly provided on a substrate, reducing overall size and number of components as no interposer is required between the sensor array and the substrate. Additionally, each of the sensing elements can be directly linked to a processing or readout unit, with no need of large charge accumulation, which improves speed of the device.

In a first aspect, the present invention provides a sensor array module, suitable for use in computed tomography (CT) applications and systems.

The sensor array module comprises a flexible substrate presenting a sensing area and a readout area. The substrate being a flexible substrate allows a great design freedom. The readout area may be separated from the sensing area within the flexible substrate. In embodiments of the present invention, the sensing area and the readout area are non-overlapping.

A sensor array, comprising a plurality of sensing elements logically organized in rows and columns, is provided on the sensing area of the flexible substrate. The sensing elements of the sensor array are processed directly on the substrate, in physical contact therewith. This setup has a simple and/or compact design and reduced complexity in terms of easy manufacture, because no interposer, bonding layer or the like needs to be provided between the sensor array and the substrate. In particular embodiments, the sensing elements are amorphous silicon (a-Si) sensing elements, which can be processed directly on, for instance, polymeric flexible substrates.

Any elements or circuitry outside the sensing area, more particularly for instance within the readout area, can be protected against radiation falling into the sensing elements of the sensing area and/or any stray charges generated therefrom.

Each sensing element of the sensor array can be electrically connected, via a direct connection, to a readout unit provided on the readout area, for example via a direct conductive path between each sensing element to the readout unit. The direct electric connection reduces or avoids charge accumulation on the sensing element (where the charge is generated when receiving radiation) and sends the charge to the readout unit, where the generated charge is interpreted and converted to an electric signal suitable for imaging. The readout unit may include processing capabilities, such as for instance, but not limited thereto, signal processing.

The direct connection between the sensing elements and the readout unit may be provided on the flexible substrate, for example by providing conductive tracks along the substrate. The substrate allows physical separation of the sensing area and the readout area. In embodiments of the present invention, the array including a-Si PDs being connected directly to the readout unit, provides high speed, meeting the needs of CT applications.

In the following, reference is made to photodiodes (PDs) as sensing elements, and photodiode arrays (PDAs) as sensor arrays; however, the present invention is not limited to these specific examples.

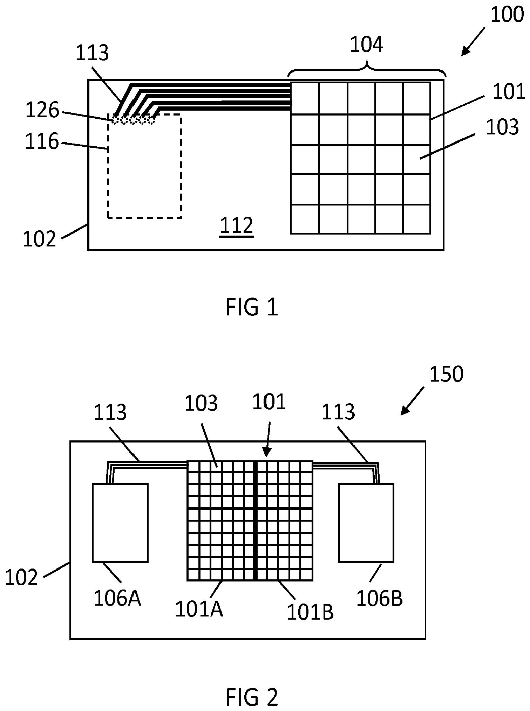

FIG 1 shows a top view of a sensor array module 100 according to embodiments of the present invention. The sensor array module comprises a flexible substrate 102, which in the example illustrated is laid out on a plane. The sensor array module presents a sensing area 104 and a readout area 116. The sensing area is provided with a sensor array 101, for instance a PDA, comprising a plurality of sensing elements 103, in the example illustrated for instance photodiodes, logically arranged in rows and columns.

The setup of the sensor array module is simplified, as the sensing elements are processed directly onto the flexible substrate, and no intermediate layer (interposer, bonding layer, etc.) is needed. For example the PDs comprise material which provides measurable signal (e.g. a charge) when it receives radiation; and this material may be deposited directly on the substrate, for example by PVD, CVD, etc. For example, it may be attached, e.g. with adhesive, specifically with adhesive that can provide electric contact between the PDs and the substrate, e.g. an adhesive that is conductive in direction perpendicular to the substrate.

In some embodiments, the PDs used may be amorphous silicon (a-Si) PDs, which may be thinner than conventional crystalline silicon (c-Si) PDs. For example the PDs may be thinner than 150 µm or even 100 µm. For example, a-Si PDs may be between 0.5 µm and 30 µm, for example between 0.5 µm and 10 µm. This may allow a compact setup. In some embodiments, the PDs may have a PIN or a NIP structure. However, the present invention is not limited by the type of photodiodes used. For example, organic, oxide semiconductor, or perovskite PDs can be used instead of a-Si PDs.

The flexibility of the substrate 102 allows greater freedom of design of the sensor array, e.g. PDA and, by extension, of a sensor array module including such PDA, and of further components comprising such sensor array module, as explained below.

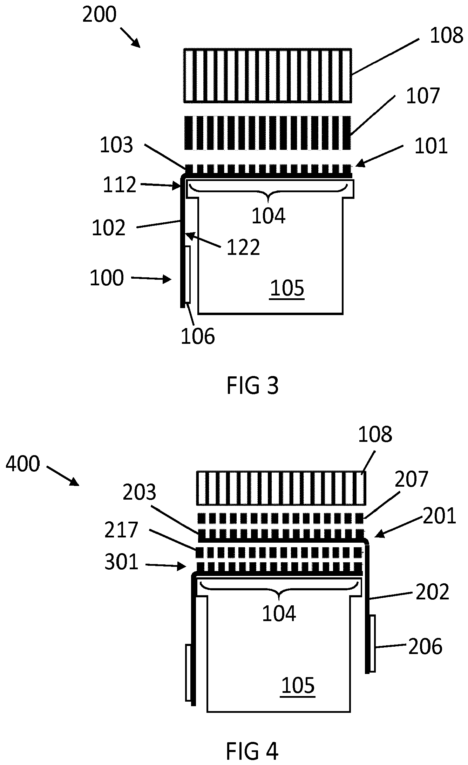

The substrate 102 may be semi-transparent or transparent. This, together with transparent or semi-transparent contacts, allows different types of illumination (front-illumination, back-illumination), and stacking of different substrates (as will be shown in FIG 3). By "transparent" is meant in this context "transparent to the range of wavelengths which can be captured by the sensing elements". The substrate may, additionally or alternatively, be thin enough (for example, a few microns thick, e.g. typically 5 µm to 50 µm) so as to ensure good transparency (e.g. good transmission of radiation detectable through it by the PDs). In some embodiments, the substrate is a polymeric substrate, which may combine flexibility and transparency. In some embodiments, the substrate comprises polyimide (PI), polyethylene naphthalate (PEN) or a combination of both. In embodiments of the present invention, the PDs can be directly provided on such substrate. For example, amorphous silicon can be deposited on the polymeric substrates at a temperature below a temperature at which the substrate is damaged or destroyed.

In some embodiments of the present invention, each sensing element 103, e.g. PD, is electrically connectable to a readout unit 106 (which may be placed on the readout area 116 shown with dashed lines in FIG 1) via one connection, e.g. a direct connection or conductive path, for example provided by a conductive track 113 or the like. For example, each PD may be in electric contact via a conductive path, to a zone 126 of the substrate where an input or pin of a readout unit can be included and connected to it. It is to be noted that the readout area 116 in FIG 1 does not need to be on the same surface 112 as the PDs 103, but may be provided on the opposite surface 122 of the substrate.

The sensor array module may be provided with a readout unit 106, thus forming a detector module 150. The readout unit 106 and each PD of the sensor array are directly connected. This means that each PD is addressable directly by a conductive path (e.g. a single conductive path), unlike the case of select lines, TFTs and similar systems, where several pixels (e.g. in a row or column) may share at least a portion of the conductor. In embodiments of the present invention, each PD and the readout unit are electrically connected with no need of switches, transistors, or the like between them. This allows a fast response, because there is no substantial storage of charge (and therefore, no substantial change of internal electric field) at the sensor array, so there is no reduction of the time response of the device. For example, in some embodiments of the present invention each PD may be connectable to a single pin of a chip acting as readout unit 106; the chip including a plurality of pins, e.g. at least as many pins or inputs as PDs in the array.

The readout unit 106 may be a readout chip, e.g. a CMOS readout circuit, multi-channel charge sensitive pre-amplifier readout integrated circuit (ROIC).

For sake of simplicity, FIG 1 only shows five conductive tracks, one for each PD of the first row of PDs in the sensing area 104. In reality, there will be many more sensing elements on a row, there will be many more rows of sensing elements in a sensor array, and there will hence be many more conductive tracks between the sensing elements and the readout area. The connections between sensing elements and the readout area are provided by conductive paths of the flexible substrate. The sensor array may be designed for top and/or back illumination, hence the substrate 102 and the conductive paths or tracks 113 and other/or connections to the sensing elements may be also transparent. For example, indium tin oxide (ITO) and/or other transparent conductive oxides (TCO) can be used on a flexible substrate.

As illustrated in FIG 1 the conductive paths extend outside the sensing area 104. The conductive paths may extend along a plane defined by the surface of the substrate, thus extending laterally to a region of the substrate outside the sensing area 104, more specifically towards the readout area 116. Although the conductive paths do not extend exclusively through the thickness of the substrate (which would result in the readout area 116 overlapping the sensing area), the conductive paths can extend through the thickness of the substrate, additionally to extending along the plane. This may be applied to a case wherein the readout area 116 is provided on a surface of the substrate opposite to the surface where the PDs are provided.

Further, in some embodiments of the present invention, the substrate may present different properties along different portions thereof. For example, the sensing area and the readout area may have different properties, such as different thickness, different materials, shapes, widths and/or thickness of conductive paths, etc., which may be optimized for each particular portion of the substrate and application.

The sensor array used in the sensor array module may comprise one or more sub-arrays, each sub-array comprising a plurality of sensing elements, the sensing elements of different sub-arrays being connectable to a different readout units. This is illustrated in FIG 2, showing a detector module 150 where the array 101 comprises two sub-arrays 101A and 101B, and where the sensing elements of the first sub-array 101A are connectable to a first readout unit 106A and the sensing elements of the second sub-array 101B are connectable to a second readout unit 106B.

In a second aspect, the present invention provides a detector tile. A detector tile comprises a holder, and at least one sensor array module according to embodiments of the present invention and provided with at least one readout unit (thus forming at least one detector module), the at least one sensor array module (detector module) being wrapped around the holder. The holder is a 3D structure, such as for instance - but not limited thereto - a block which is substantially beam-shaped or cube-shaped. With "substantially X-shaped" is meant that the overall shape of the block looks like shape X, but that indentations and/or protrusions may be provided, such as grooves, cut-outs, ribs, and the like, which make the shape of the block deviate from an actual X-shape. The block has several side surfaces. The wrapping of the sensor array module around the holder is such that the sensing area is provided on one side surface, while the readout area is provided on another, for instance adjacent, side surface. A readout unit can be easily installed on the flexible substrate, on the readout area, which is separated from the sensing area. Upon installation of the sensor array module on the holder, the shape of the flexible substrate may be changed according to the specific needs and shape of the holder, thus wrapping the sensor array module around the holder.

The at least one sensor array module wrapped around the holder to form a detector tile comprises a sensor array as explained before, and at least one readout unit, both provided on a flexible substrate. As explained before, the sensing elements of the sensor array may be processed directly on the flexible substrate, and the one or more readout units may be provided on the flexible substrate, for instance by bonding or soldering. The sensor array may comprise one or more sub-arrays of sensing elements, the sensing elements of sub-arrays being electrically connected to readout units. The sensor array may for instance comprise a first and a second sub-array of sensing elements, and sensing elements of the first sub-array may be connected to a first readout unit, and sensing elements of the second sub-array may be connected to a second readout unit. When wrapping this sensor array module around the holder to form a detector tile, this may be done such that the sensor array, including the first and second sub-arrays, is provided at one side surface of the holder, while the first and second readout units are provided at other side surfaces of the holder, different from the side surface where the sensor array is provided. In particular embodiments, the first and second arrays may be provided at different side surfaces of the holder. For large area, a first set may be on one side of the holder and a second set on an opposite side, or even all four sides of a square or rectangular holder could be used. It is in particular the flexibility of the substrate which allows the wrapping of the at least one sensor array module around the holder, and which simplifies assembly of the detector tile, enabling a significant cost reduction in making such detector tile.

The particular combination of using a-Si technology (instead of c-Si) for the sensing elements, and the sensor array module assembly simplification due to the use of a flexible substrate, enable a significant cost reduction in making a detector tile, e.g. a CT detector tile.

As before, examples of the detector tile will be described in relation to a sensor array module including PDA and PDs, suitable for providing a CT detector tile, but the present invention may include other types of sensing elements, not only PDs.

FIG 3 shows a cross section of a CT detector tile 200 including a sensor array module 100 according to embodiments of the first aspect of the present invention. The sensor array module comprises a PDA 101 within sensing area 104 of the flexible substrate 102. The PDs 103 of the PDA are logically organized in rows and columns, and are processed directly onto the flexible substrate as explained in relation to embodiments of the first aspect of the present invention.

The sensor array module may be attached to a holder 105 by any suitable means, such as for instance adhesive or the like.

The example of FIG 3 clearly shows that the PDs 103 are directly provided onto a surface 112 of the flexible substrate 102, with no need of bonding layer or interposers therebetween. For example, each of the PDs 103 is in physical contact with the substrate 102.

The readout unit 106 is placed on the readout area 116 of the flexible substrate; remote from the sensing area 104, and the substrate is arranged so that the sensing area does not overlap the readout area with respect to a normal to the substrate surface when the substrate is laid out in a plane. In the embodiment illustrated in FIG 3, the substrate is wrapped around a beam-shaped holder 105, by folding the flexible substrate over 90° such that the sensing area is present on one side surface of the holder, and the readout area is present at a side surface of the holder substantially perpendicular thereto.

Any signal generated in the sensing elements (by impinging radiation) can be rerouted outside the sensing area over the conductive tracks 113 along the flexible substrate, towards the readout area and into the readout unit.

By the positioning of the sensing area and the readout area on different side surfaces of the holder, the readout unit and related circuitry can be protected from e.g. radiation. A flexible substrate may provide this arrangement easily, as a flexible substrate allows more adaptation to the shape of a holder and/or better abutting than a rigid substrate. The readout unit 106 may be attached to the substrate 102 in an easy way.

The readout unit 106 may be provided on the opposite surface 122 of the substrate 102, compared to the substrate surface 112 on which the sensor array 101 is provided. A proper choice of arrangement may allow a safe abutting of tiles (see below with respect to formation of a detector comprising a plurality of tiles) with protection of the readout unit, as the readout unit faces the holder 105 rather than the substrate of the sensor array module of an adjacent tile. Accordingly, in those cases in which the readout unit 106 is provided on a surface opposite to the surface onto which the PDs are processed, the conductive paths may optionally include electrically conducting connections from one surface of the substrate to the opposite surface, including (but not limited to) through-hole vias (THV), buried vias, blind vias. This may allow easily connecting each PD on a surface 112 of the substrate 102 with a readout unit 106 on the opposite surface 122 of the substrate 102. The present invention is not limited thereto, and the readout unit may be provided on the same surface as the PDs.

In embodiments of the present invention, the CT detector tile 200 includes at least one scintillator array 107 (represented as a layer separated from the sensing elements in FIG 3), which emits radiation (usually optical radiation, the present invention not limited thereto) when struck by an X ray. This radiation emitted by the scintillating material is received by a photodiode of the PDA, usually a predetermined PD functionally linked to a particular zone of the scintillator array 107 (thus enabling linking the received radiation to a position, for creating the image). The PD provides the measurable signal as a response to the radiation generated by the scintillator. The present invention is not limited thereto; for example, the device may comprise sensing elements that can provide a measurable response from received radiation with no need of scintillator, e.g. from received X-rays. Or conversely, more than one scintillator array 107 may be provided, each providing different wavelength conversions (thus allowing different radiation energies to be detected).

The present invention is not limited by this configuration; for example the PDA may be configured for back-illumination, and the scintillator array 107 may be sandwiched between the substrate 102 and the holder 105.

In some embodiments of the present invention, the CT detector tile 200 includes an anti-scatter grid 108 (also shown in FIG 3 as a layer separated from the rest of the device). The grid may collimate radiation (e.g. X-rays) directly into the sensing elements, or for example to the particular zone of the scintillator array functionally linked to a predetermined PD.

In embodiments of the present invention, the detector tile may include more than one sensor array module, for example laid out next to each other, or optionally on top of each other, thus forming a multi-layer CT detector tile. Such detector tiles formed with sensor array modules including thin PDs, in accordance with embodiments of the present invention, may present low probability of direct detection events of X-ray quanta.

FIG 4 shows an array arrangement for a particular example of a multi-layer detector tile 400, in this particular case a dual-layer CT detector tile comprising a holder 105 and two stacked sensor array modules with respective sensor arrays, e.g. PDAs 201, 301 in accordance with embodiments of the first aspect of the present invention. It further includes an anti-scatter grid 108 and two scintillator arrays 207, 217 on top of a PDA 201 and respectively sandwiched between PDAs 201, 301. The stacking of the sensor array modules is such that their sensing areas are substantially located on top of one another. The PDs 203 of at least the top array 201 can be thin (e.g. around or under 30 µm), for example they may comprise a-Si PDs so X-ray quanta have less chance to be directly captured, thus improving the reliability of the CT detector tile.

Moreover, as the flexible substrate of the sensor array modules, for example substrate 202 of the sensor array module at the top of the stack, may be a thin and/or transparent substrate, and the conductive paths may also allow transmission, it allows good transmission (e.g. transmission of X-rays) to the under-the-top sensor array 301 (e.g. the array sandwiched between the top array 201 and the holder 105), particularly to its scintillator array 217 on top of the PDs of the PDA 301. A transparent flexible substrate, possibly including transparent contacts, for example top and bottom contacts, further allows front and back-illumination modes, and the flexibility of the substrates may improve the accuracy of the placement of the arrays.

It is to be noted that the readout unit 206 shown in this case is on the same surface of the flexible substrate as the PDs 203, thus allowing provision of conductive paths easily on a single surface with no need of vias or the like.

The detector tile of embodiments of the present invention is not limited to the examples, and other configurations are possible. The different elements may be stacked in such a way so as to allow or enable front-illumination and/or back-illumination. For example, in some embodiments the sensing elements of the PDA may be sandwiched between its transparent substrate and the holder, so the surface including the PDs is attached, e.g. glued, to the holder. The scintillator then can be attached to the back of the substrate, allowing back-illumination.

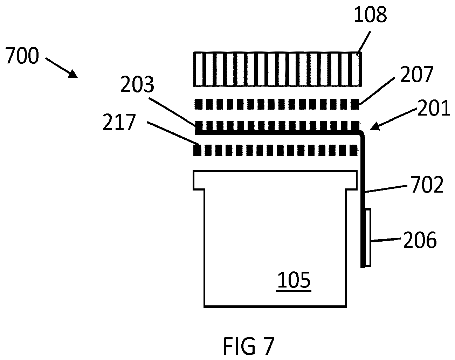

In additional or alternative embodiments, two or more scintillator arrays may be stacked, where the sensing array is optically coupled to two scintillators. This exemplary embodiment of detector tile 700 is shown in FIG 7, where the two scintillators 207, 217 are placed at opposite sides of transparent or semi-transparent substrate 702, so it can collect light from both scintillators 207, 217. Illuminating the sensor array 201 from two sides with scintillator light allows improving detective quantum efficiency (DQE) for (spectral and non-spectral) X-ray imaging. Thinner scintillator layers can be used than if using a single scintillator array, improving modulation transfer function, while the total scintillator thickness may increase, leading to further improvement of DQE. In this case, both on top and bottom contacts of sensing elements, facing each scintillator array 207, 217, are also transparent or semi-transparent.

In a third aspect, the present invention provides a detector. The detector is built from a plurality of detector tiles according to the second aspect of the present invention, placed adjacent to one another. Assembly of a detector comprising a plurality of detector tiles according to the second aspect of the present invention, each detector tile including a sensor array module according to the first aspect of the present invention, is simplified. For example, the flexible substrate of the sensor array module, wrapped around the holder for forming the detector tile, allows abutting detector tiles and aligning them easily, with no stringent design conditions for fitting the tiles, as will be explained below. It may also allow an overall more robust, less fragile detector.

A detector tile according to embodiments of the second aspect of the present invention, including a sensor array module of embodiments of the present invention, can be abutted to at least one further detector tile, more specifically to a side of a tile, thereby providing a tiled detector. The sensing area of the tiled detector equals the sum of areas of the sensor arrays of the different detector tiles together forming the detector.

Abutment may be performed on all sides of a tile. The sensing area of each detector tile may be separated from the sensing area of an adjacent abutted detector tile by few microns, for example 100 µm, for example within a range of 50 µm to 300 µm, thus obtaining a detector without, or with negligible, "blind spots". The flexibility of the substrate may improve the packing of the tiles, thus increasing detector tile density and hence improving resolution.

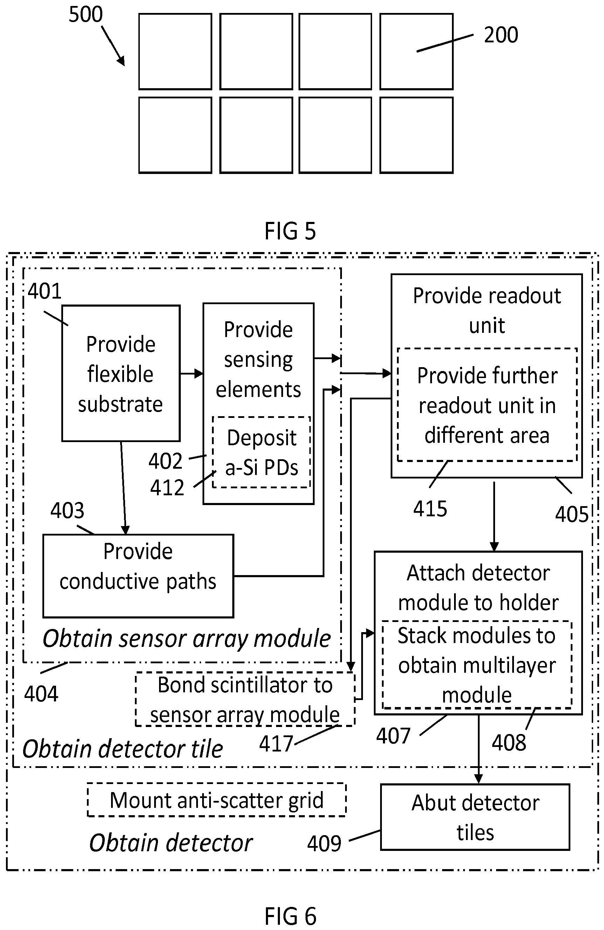

FIG 5 schematically illustrates a top view of a detector 500, for instance a CT detector, according to embodiments of the present invention, assembled from a plurality of detector tiles 200 abutted next to one another. In the embodiment illustrated, the detector tiles are arranged in a regular array of 2 by 4 tiles, but the invention is not limited thereto. Substantially any combination of detector tiles may be made to form a detector according to embodiments of the present invention.

The detector tiles 200, e.g. CT detector tiles, may for example have a rectangular or square sensing area, and can be placed adjacent other, for instance similar, tiles to, in combination, form the detector, e.g. CT detector. The detector tile according to embodiments of the present invention provides sufficient distance between the sensor array and the readout unit, to reduce or avoid influences and cross-talk between sensing elements and readout unit.

The holder may be shaped, e.g. adapted to the shape of a detector, e.g. with a small curvature, together with the flexible substrate and other elements (scintillator, etc.).

In a fourth aspect, the present invention provides a method of manufacturing of a sensor array module in accordance with embodiments of the first aspect of the present invention, a method of manufacturing of a detector tile according to the second aspect of the present invention, and a method of manufacturing of a detector according to the third aspect of the present invention.

FIG 6 is a flowchart showing steps and optional steps, the latter in dashed boxes, for obtaining a sensor array module, a detector tile, e.g. a CT detector tile, and a detector, e.g. a CT detector, all according to embodiments of the present invention.

In a first step, a flexible substrate is provided 401. The substrate may for example be a PI or PEN flexible thin substrate (for example with a thickness of 25 microns), and it may be transparent, allowing front and back-illumination.

A plurality of sensing elements is provided 402 on one surface of the flexible substrate, logically arranged in rows and columns of an array, and a conductive path per sensing element is provided 403. The steps of providing the sensing elements and the conductive paths can be carried out in any order, for example simultaneously, for example by masking, etching, etc.

In the method according to embodiments of the present invention, there is no need of providing interposers between sensing elements and the flexible substrate, and there is no need of a bonding step (no need of e.g. flip-chip bonding) or a bonding layer either, thus simplifying the manufacturing process. The present invention provides a method of obtaining 404 a sensor array module (e.g. comprising a PDA), which may be thin, compact and may allow fast transfer of signals, in an inexpensive way.

Providing 402 sensing elements may include providing PDs on a first area (sensing area) of the substrate, for example by PVD, CVD, using masking, etc. More specifically it may include depositing 412 amorphous silicon PDs, thereby forming an array of PDs which may be advantageously thin, thus obtaining a compact device. Additionally, a-Si deposition is a well-known technique which allows high control, and, in view of the low temperatures which come into play, it does not endanger the integrity of the substrate, even in the case of suitable polymeric substrates. The PDs may be arranged for front or back illumination, provided the substrate is sufficiently transparent for the type of irradiation to be detected.

Accordingly, the conductive paths may extend over the substrate, along the plane of the surface of the substrate, outside the sensing area (outside the region adapted for receiving radiation) into the readout area. Providing conductive paths may include providing conductive tracks only on the surface of the substrate, which simplifies the process. The present invention is, however, not limited thereto, and providing conductive tracks may also include providing tracks through the thickness of the substrate. Providing conductive paths may therefore also include providing through substrate vias, buried connections or the like, which allows providing the readout unit in a side of the surface opposite to the side of the sensing elements. In some cases, this can provide extra protection to the readout unit.

The present invention also provides a method of manufacturing a detector tile. It comprises obtaining 404 a sensor array module as previously described, and providing 405 at least one readout unit to the sensor array module, thus obtaining a detector module. The readout unit is provided directly on the flexible substrate, by connecting each conductive path of the substrate (leading to one sensing element) to one input of the readout unit (e.g. to one pin of the readout chip, e.g. CMOS chip). In some embodiments, the method may comprise providing 415 a further readout unit in a different readout area of the substrate, which allows obtaining a multi-processor detector module.

The detector module may be attached 407 to a surface of a holder, thereby providing a detector tile. In some embodiments, the sensor array and the holder are linked by the substrate directly attached to the surface of the holder.

The attachment of the detector module can be performed so one surface of the holder may be covered for example only with the sensing area of the sensor array module, which is adapted to receive radiation when installed as part of a detector, while the readout unit provided on that sensor array module is at a predetermined distance from, and not overlapping, said sensing area. With a flexible substrate, this can be done easily and with a great degree of freedom of module and tile design. In some embodiments, the substrate may be attached to a shaped surface of the holder, for example a convex surface, which may improve radiation collection and potentially reduce aberration.

A dual-layer detector tile can be obtained by stacking 408 the sensing areas of two sensor array modules on top of one another on the holder. In other embodiments, two sensor array modules with transparent substrates, including each at least one readout unit, are stacked, by stacking the sensing areas thereof on top of the other. This attachment can be done by adhesive.

Other steps may be included. For example, a scintillator array may be bonded 417 or otherwise attached to the sensor array module as suitable, and depending of the type of illumination of the PDA. For example this can be done after the step of providing 405 the readout unit, but it can be done before providing 405 the readout unit, or after attaching 407 the detector module to the holder, or even as an intermediate step during stacking 408 modules, by bonding a scintillator between two modules.

The method may include providing signal output for outputting the readout signal from the readout unit, and/or further instruments, such as one or more scintillator arrays, anti-scatter grid, or other collimation, detection and processing instruments.

A detector can be assembled in a simple way, in accordance with embodiments of the present invention. The assembly may comprise the steps of abutting 409 a plurality of detector tiles adjacent one another, thus obtaining a detector which can be installed in a medical device. In some embodiments, for example, by processing the sensing elements, e.g. photodiodes, directly on a flexible substrate and hereby removing the standard PDA bonding step, the detector assembly becomes very simple, and a detector can be easily obtained by abutting the tiles with flexible substrates adjacent to each other. The flexible substrate used, as mentioned earlier, may provide easy and tight abutment.

Other steps, such as mounting 419 an anti-scatter grid, may be included.

Finally, if the detector thus formed is a CT detector, this CT detector can be installed in a CT gantry.

The detector obtained in accordance with embodiments of the present invention can be included in sensing applications, for example the mentioned CT applications (not only in medical applications, but also non-medical applications such as non-destructive testing archaeology, biology, quality inspection or the like). The present invention may provide low cost CT systems.

## Claims

**1.** A sensor array module (100) for sensing radiation, the sensor array module comprising:
a flexible substrate (102, 702) including a surface (112),
a plurality of sensing elements (103) directly provided on a sensing area (104) of the surface (112) of the flexible substrate (102, 702),
a plurality of conductive paths comprised on the substrate (102, 702), each conductive path (113) providing a direct electric connection between each sensing element (103) and one zone (126) of the substrate adapted for connecting one input of a readout unit (106).

**2.** The sensor array module (100) of claim 1, wherein the plurality of conductive paths extend outside the sensing area (104), along the substrate (102, 702) in at least a direction that can be defined on the plane of the surface (112) of the substrate (102, 702).

**3.** The sensor array module (100) of claim 1, including at least one scintillator array (107) for providing wavelength conversion between radiation impinging on the sensor array module and radiation impinging on the sensing elements (103) thereof.

**4.** The sensor array module (100) of claim 1, wherein the substrate (102, 702) is a transparent or semi-transparent substrate and at least the contacts of sensing elements (103) facing the substrate are transparent.

**5.** The sensor array module of claim 4, further comprising at least two scintillator arrays (207, 217), wherein the at least two scintillator arrays (207, 217) are optically coupled to the plurality of sensing elements (203) at two opposite sides of the transparent or semi-transparent substrate (702).

**6.** The sensor array module of claim 1, wherein the substrate (102, 702) comprises polyimide and/or polyethylene naphthalate.

**7.** The sensor array module of claim 1, where the sensing elements (103) comprise amorphous silicon photodiodes.

**8.** The sensor array module of claim 1, further comprising at least one readout unit (106) for reading out signals generated by the sensing elements (103), the readout unit (106) provided on a readout area (116) of the substrate not overlapping the sensing area (104).

**9.** A detector tile including at least one sensor array module (100, 150, 200) of claim 1 and a holder (105) for holding the sensor array module (100, 150, 200).

**10.** The detector tile of claim 9, wherein the detector tile comprises more than one sensor array module (100, 150, 200) stacked on top of each other.

**11.** A detector comprising a plurality of detector tiles of claim 9 abutted against one

**12.** The detector of claim 11, adapted for providing a gap distance equal or lower than 300 µm, where the gap distance is the distance between areas of the substrate including sensing elements of at least two tiles.

**13.** A method of manufacturing a sensor array module, the method comprising the step of providing (401) a flexible substrate, subsequently further comprising the non-sequential steps of
- providing (402) an array of sensing elements directly on an area of the surface of the flexible substrate, and
- providing (403) conductive paths on the substrate, between an area on the surface of the substrate for receiving sensing elements and a further area of the substrate, for providing a direct electric connection between each sensing element and one input of a readout unit.

**154.** The method of claim 13, wherein the step of providing (402) an array of sensing elements comprises depositing (412) amorphous silicon photodiodes on the substrate.

**15.** The method of claim 13, further comprising providing (405) a readout unit on an area of the substrate not overlapping with the sensing area comprising the sensing elements, and connecting one input of the readout unit to each conductive path on the substrate.
